# EUROPEAN PATENT SPECIFICATION

(11) **EP 1 114 129 B1**
(45) Date of publication and mention of the grant of the patent: **08.10.2003**
(21) Application number: 99939476.0
(22) Date of filing: 24.08.1999
(51) Int. Cl.: C10J 3/54, B01J 8/32

(54) **GASIFICATION OF BIOMASS IN A FLUIDISED BED CONTAINING ANTI-AGGLOMERATING BED MATERIAL**
VERGASUNG VON BIOMASSE IN EINEM ANTI-AGGLOMERATIONS-MATERIAL ENTHALTENDEN WIRBELBETT
GAZEIFICATION DE BIOMASSE DANS UN LIT FLUIDISE CONTENANT UN MATERIAU DE LIT ANTI-AGGLOMERANT

(30) Priority: 25.08.1998 FI 981817
(43) Date of publication of application: 11.07.2001
(73) Proprietor: Valtion Teknillinen Tutkimuskeskus, 02044 VTT (FI)
(72) Inventor: KURKELA, Esa, FIN-02210 Espoo (FI); MOILANEN, Antero, FIN-00510 Helsinki (FI); KANGASMAA, Kalle, FIN-02130 Espoo (FI)
(74) Representative: Saijonmaa, Olli-Pekka
(86) International application number: FI9900695
(87) International publication number: WO00011115

(56) References cited:
- EP-A1- 0 223 619
- US-A- 4 391 612
- US-A- 4 448 589
- US-A- 4 597 771
- US-A- 5 425 317

## Description

The object of this invention is a method for gasifying biofuel in a fluidized bed reactor according to which method fuel and gasifying gas are fed to a flow including solid fluidized particles that is led through the reactor.

In gasifying biofuel in a fluidized bed reactor the problem is in many cases melting and/or sintering of ashes that interferes with fluidization by causing agglomeration of the fluidized particles, and causes harmful deposits in upper parts of the reactor and in gas circulation and outlet conduits. When using as fuel certain wood species common in Finnland this problem does not occur because the ashes contained in these species do not melt or sinter at the temperatures below 900 °C that are used in the gasifying. Instead, this problem concerns many other biofuels such as most agricultural waste and rapidly growing biomasses such as fertilized willow that is grown for energy production. In the last mentioned alkali metals sodium and potassium reduce the melting and sintering temperatures of the ashes. The same effect may be produced by chlorides and sulphates of zinc, manganese, lead and iron. With these biomaterials ashes may melt or sinter even under temperatures of 700 - 800 °C, that is at temperatures that are insufficient to cause the carbon conversion that is essential for efficient gasifying.

One way to avoid this problem is to gasify biofuel mixed in charcoal such that the proportion of biomass in the mixture is less than 50% by weight. The biofuel is thus an extension of the charcoal that is the main fuel of the plant. This procedure does not furnish a solution for gasifying biofuel as such in its own reactor such that the ashes that is produced mainly free of heavy metals could be returned as fertilizer back to the woods or fields.

Another mode of solution in order to avoid this problem is use of alkali binding reactive additives such as kaolin in gasifying. The drawback of these additives is however their expensiveness and in some cases thay can hinder the use of the ashes obtained as fertilizer.

It could also be envisaged the raising of the melting and sintering temperature of the ashes with some additive such that the gasifying temperature needed would remain thereunder. One substance known to raise the melting temperature of ashes is aluminium oxide, but when this was tried as fluidized particles in gasifying straw that is difficult to gasify the result was adhering of the ashes to the surface of the aluminium oxide granules as a film that further adhered thereupon other particles such that the result was agglomeration of the fluidized bed.

In the US Patent 4 448 589 there is described a process for fuel gasification that uses a bubbling fluidized bed with a certain static height maintaining the fluidized particles. In order to circumvent the problem of agglomeration there is proposed adding to the fluidized particles of quartz sand a preventive material that may be of limestone, marble or dolomite. While the preventive material may be pulverized by the action of sand and therewith leave the fluidized bed the aforementioned publication recommends the aforementioned calcium carbonate minerals because of their relative hardness so that the loss of preventive material and the need for addition thereof remain as low as possible. The solids leaving the bubbling fluidized bed is very finely sized and may be separated in a cyclone. In the technique according to this publication the problem posed by the removal of ashes is not efficiently solved whereby in long term gasifying agglomeration may occur. Furthermorer by this technique the accumulation of solids as harmful deposits on the upper parts of the reactor and to the gas exhaust outlets can not be avoided, and this leads progressively to blocking of outlets.

The present invention aims at eliminating the problems mentioned above with a solution that makes possible gasifying biofuels such as various agricultural wastes and energy biomasses that are difficult to gasify at temperatures high enough from the point of view of charcoal conversion without the problem of agglomeration caused by the melting or sintering ashes and without the need of using expensive additives in order to avoid agglomeration all the while the ashes remaining from the fuel is useful as fertilizer for fields or woods. The inventive method for gasifying is characterized in that a circulation is maintained through the reactor that contains a part of the processed fluidized particles, that the gasifying is conducted at a temperature that is higher than the melting point or sintering point temperature of the ashes produced from the fuel, that the particles contained in the fluidized bed are comprised of particles that are of a hard, essentially non-grindable material in adamixture with particles that are of an easily grindable porous material, whereby said porous particles are pulverized in fluidization while at the same time binding ash upon themselves, that porous particles are added to the circulation and that finely ground ash containing particles are removed from the circulation.

Contrary to US Patent 4 448 589 essential to the invention is the circulation lead through the reactor that contains circulating fluidized particles. While the inventive method is operated at temperatures above the melting and sintering temperature of the ashes, a gasifying temperature that is sufficient from the point of view of the charcoal conversion and that is preferably over 800 °C may be used. By using as fluidized particles at the same time hard non-grindable particles and more brittle, porous particles one achieves that the porous particles act as ash binders all the while they are ground at the impact of the hard particles and eventually as sufficiently ground may be separated from the circulation such that with them also the ashes are removed. The larger sized particles that are mainly of the aforementioned hard material stay in the process mostly in place in a stationary fluidized bed while the finer particles the main part of which consist of the aforementioned porous material circulate in the circulation and thus penetrate repeatedly the stationary fluidized bed including hard particles where the porous particles when colliding with the hard particles are ground finer and finer. The removal of the finest particles from the circulation is then accomplished with suitable separation means which includes at least a cyclone outside the reactor space proper. The continous removal of finer particles keeps the amount of ashes in the process low.

Essential from the inventive point of view is that in any case the circulation contains a sufficient amount of relatively coarse fluidized particles in the circulation that sweep the walls of the reactor and of the circulation channels such that creation of harmful solid deposits is avoided.

As fluidized particles in the process according to the invention may preferably be used inexpensive materials, as hard non-grindable particles suitably sand with a particle size of about 0.1 - 0.6 mm and as grindable particles a porous mineral such as limestone or dolomite with a particle size at the time of feed of about 0.1 - 0.6 mm. Especially the smaller sand particles that end up in circulation possess an efficient cleansing effect on the reactor and channel walls. The same applies to the chalk and dolomite particles that are relatively coarse at the beginning of their grinding. The grinding of the last mentioned proceeds however rapidly without hindrance of the ashes bound thereupon while lots of specific area is produced for the ashes to bind upon. It is preferred that ash containing particles pulverized to about 5 - 20 µm particle size that travel in the circulation through the separation cyclone can be separated from the product gas eg. by the means of a secondary cyclone or filters.

The feasibility of the inventive method has been detected in experiments where as gasifiable material straw has been used that includes plenty of potassium and chlorine. As to these experiments, reference is made to the working examples further down. When straw was gasified by traditional methods substantial sintering of ashes was detected even at 750 °C and total sintering of ashes under the temperature of 800 °C, whereby as a result the fluidized bed layer was strongly agglomerated and ash layers were produced in upper parts of the reactor. Using mere sand as fluidized particles resulted in agglomeration of the fluidized bed layer. When the fluidized particles were composed of solely grindable material, in the experiments limestone, there was no agglomeration but the consumption of limestone was because of its plentiful grinding so extensive, even 10% - 20% of the amount of fuel fed, as to render the procedure useless. In contrast, a functional, useful process with high carbon conversion without agglomeration of the fluidized bed layer was realized when using as fluidized particles hard, non-grindable particles and grindable, porous particles in admixture according to the invention.

In the inventive process optimally a major part of fluidized particles is composed of hard, non-grindable material such as sand. The particles in the fluidized bed and in the circulation can thus comprehend 70% - 90%, preferably about 80% by weight, hard non-grindable particles and 10% - 30%, preferably about 20% by weight grindable, porous particles.

Both aforementioned hard and porous particles may be added to the fluidized bed layer or to the circulation during the gasifying process as need may be. Porous particles such as limestone or dolomite particles are added suitably at about 1% - 4% by weight of the amount of fuel fed, while the hard, non-grindable particles such as sand particles, may be added at about 1% - 3% by weight of the amount of fuel fed. The lesser percentage of porous particles mentioned in fluidized particles is due to the particles' shorter residence time in the process. Adding hard particles to the process will make up for their loss from the bottom of the fluidized bed reactor in context of removing the ashes accumulated thereupon.

It is preferred that the gasifying gas be composed of a mixture of air and water vapour where the percentage of water vapour is at the most about 30% by volume while most preferred is about 10% - 30% by volume. According to the experiments, even water vapour has a significant impact upon the hindering of agglomeration of the fluidized bed.

In order to achieve in gasifying an over 90% or even better, an over 95% carbon conversion the gasifying temperature used is preferably 800 °C or more. The gasifying temperature may then be about 50 - 200 °C higher than the melting or sintering temperature of the fuel ashes.

The inventive method is particularly preferred for gasifying such biofuels by which the melting or sintering temperature of ashes is low because of sodium or potassium present. Such materials suitable for energy production are straws or like agricultural wastes of plant origin and energy willow or like cultivated fast growing biomass.

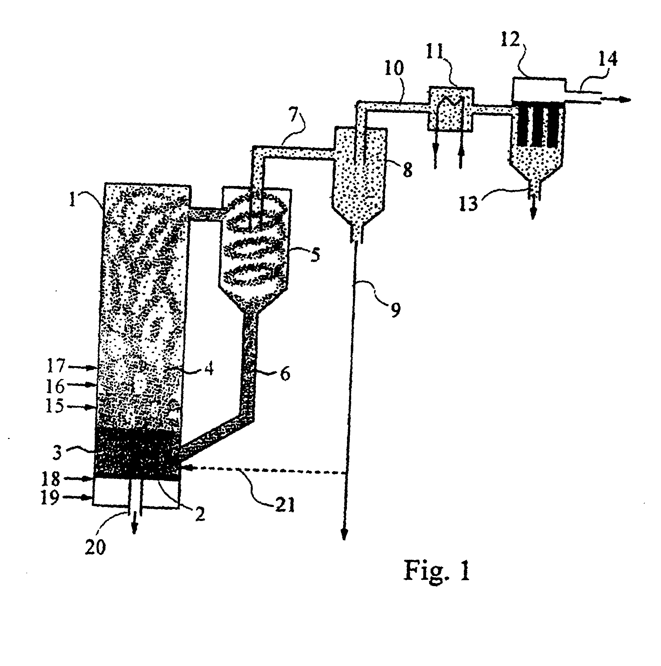

In the following the invention is illustrated with reference to the attached drawing (Fig. 1) where is described an example of equipment suitable for realizing the gasifying process.

The equipment according to this drawing comprises a vertical cylindrical reactor 1 functioning as a fluidized bed reactor whose lower part is provided with a grate 2. On top of the grate 2 is a stationary fluidized bed layer 3 that is composed of larger fluidized particles, and on top of this the reactor 1 contains in circulation smaller fluidized particles 4. The gas flow along with particles contained therein are transferred from the upper part of the reactor I to a primary cyclone 5 from which the circulating particles are circulated along a conduit 6 back to the reactor 1. The product gas along with the smallest particles leaving reactor 1 in upwardly circulation 4 travel through primary cyclone 5 and therefrom along a conduit 7 to a secondary cyclone 8 where most of the aforementioned particles are separated as a removable fraction 9. The medium along with the finest particles contained therein are transferred from the secondary cyclone 8 along a conduit 10 to a gas cooler 11 and therefrom to a filter 12. The filter 12 separates the finest dust fraction 13 from the purified fuel gas 14 obtained as the final result of the process.

The feed of the biofuel to be gasified, of the fluidized particles and the gasifying gas to the reactor 1 is represented in Fig. 1 schematically with arrows such that the arrow 15 stands for fuel, arrow 16 stands for the hard, non grindable particles to be added to the process, the arrow 17 for the grindable, porous particles, the arrow 18 for air and the arrow 19 for water vapour. From the bottom on the reactor 1 starts a channel 20 for the bottom ashes removed from the process along with larger sized particles contained therein. With reference number 21 is pointed the optional return of the particle fraction 9 separated by the secondary cyclone 8 to the reactor 1 whereby the ash containing particles to be removed from the process is represented by the fraction 13 removed from the filter 12.

In the process depicted in Fig. 1 the feed 15, e.g. wheat straw, is fed to the reactor 1 on top of the stationary fluidized bed layer 3 situated in the bottom part of the reactor 1. On top of the fluidized bed layer 3 is fed also the hard, non-grindable particle material 16, e.g. sand or aluminium oxide, and the porous, grindable particle material 17, e.g. limestone or dolomite. The aforementioned particles 16, 17 may be fed together with the fuel 15 or by means of separate feed equipment. The non-grindable particles 16 are suitably sized 0.1 - 0.6 mm whereby a part of these particles remains at all times in the stationary fluidized bed layer 3 while another part is part of the circulation 4, 5, 6. Even the grindable porous material 17 may at the time of the feed be sized 0.1 - 0.6 mm, but due to the fast grinding of the particles they will be mainly in the process circulation 4, 5, 6. If the grindable material is limestone calcium carbonate will at the process temperature be calcinated to calcium oxide while at the same time grinding increases the porous surface of the particles. Gasifying gas is composed of air 18 and water vapour 19 that are fed to the reactor from under the grate 2 in order to support the fluidized bed 3 and the circulation. The ashes that are freed from the biofuel gasified in the process partly melts and/or becomes vaporized and partly remains as extremely finely sized, easily adhering solid material. Most part of the ashes is bound to finely sized, grindable porous particles. The primary-cyclone 5 lets the finest, e.g. the ones sized under 20 µm, particles to the leaving product gas containing flow 7 from which the secondary cyclone 8 separates particle fraction 9 that contains ground ash containing particks leaving the process. The filter 12 functions thereby as final cleansing means of the gas from the dust remaining. However, it is possible to return the cyclone separated particle fraction back to the gasifyimg process whereby separation of the ash containing fraction to be removed is achieved solely with filters. Additionally the ashes at the bottom of the reactor 1 and coarse particles are removed from time to time from the reactor to the passage 20.

### Example 1

The material to be gasified was wheat straw at a humidity of 10.5% by weight, average particle size 2 mm, dry substance content of 47.5% C, 5.9% H, 0.7% N and 4.8% ashes plus from the point of view of gasifying problematic elementary contents of 6 120 ppm Cl, 140 ppm Na and 16 730 ppm K. This material which had been found to cause strong agglomeration of the fluidized bed and accumulation of ashes to the upper parts of the reactor in traditional fluidized bed gasifying, was gasified according to the invention in an equipment according to the included Fig. 1 where the inner diameter of the reactor was 154 mm.

The gasifying was accomplished at the temperature of 805 - 819 °C and from under the stationary fluidized bed was blown 14.7 g/sec air plus 2.7 g/sec water vapour. The fuel feed was at 11.3 g/sec. Along with the fuel was fed 0.42 g/sec limestone with a particle size of 0.1 - 0.6 mm, and at 0.42 g/sec sand the particle size of which was likewise 0.1 - 0.6 mm. The pressure difference across the fluidized bed was kept constant by removing from the bottom of the reactor bed material composed mainly of sand. The conditions of gasifying along with essential results achieved are represented in the table below. The total duration of the gasifying experiment was about 10 hours during which time no problems were detected in the process. Main part of the ashes of the fuel were removed by means of the secondary cyclone and the filter. Of the potassium in the straw 49% were removed along with the cyclone dust, 30% were removed by filter and 21% in bottom ashes.

### Example 2

The same biomaterial as in example 1 was gasified in conditions that are represented in the following table. Here the gasifying was conducted at the temperature of 833 - 841 °C. Also, the amount of sand fed was distincly reduced when compared to example 1. In this experiment, in order to maximise conversion of carbon, even the solids separated by the secondary Cyclone were returned back to the stationary fluidized bed layer of the gasifying equipment. From the reactor bottom mainly material composed of sand particles was removed, all of the fly ashes was removed by the filter. The total duration of the experiment was about 10 hours and the results obtained are represented in the table. The ashes removed from the reactor bottom were found to contain small agglomerates of about 1 - 2 mm, however, these didn't yet pose problems to the functioning of the process.

### Example 3

In this example the gasifying equipment was operated as in example 2 except that the dust separated in the secondary cyclone was not recycled back to the circulation. Even this experiment the results of which are represented in the table was successful and the carbon conversion attained was only about 1.5 percentage units lower than in experiment 2. The total duration of the experiment was 11 hours during which time no problems were encountered. The amount of agglomerates in the bottom ashes was clearly lower than in example 2.

**Table**

| **Example** | **1** | **2** | **3** |
|---|---|---|---|
| Air coefficient | 0.26 | 0.28 | 0.27 |
| Temperature of solid fluidized bed. °C | 819 | 841 | 842 |
| Temperature of the ascending circulation. °C | 805 | 833 | 836 |
| Pressure difference of fluidized bed. mbar | 53 | 54 | 53 |
| Dust recycle/separation in secondary cyclone | Separation | Recycle | Separation |
| Temperature of gas after secondary cyclone. | 520 | 530 | 710 |
| °C | 360 | 350 | 430 |
| Temperature of filter. °C | | | |
| Mass flow of fuel. g/sec | 11.3 | 11.5 | 11.2 |
| Mass flow of air. g/sec | 14.7 | 15.3 | 15.6 |
| Mass flow of water vapour. g/sec | 2.7 | 2.0 | 2.2 |
| Mass flow of limestone. g/sec | 0.42 | 0.39 | 0.41 |
| Mass flow of sand. g/sec | 0.42 | 0.13 | 0.14 |
| Velocity of gas in upper part of reactor. m/sec | 5.0 | 5.0 | 5.1 |
| Product gas flow. m³ₙ/h (humid gas) | 95 | 92 | 94 |
| Composition of gas. %: | | | |
| CO | 11.4 | 11.4 | 11.3 |
| CO₂ | 12.9 | 13.3 | 13.0 |
| H₂ | 8.2 | 8.7 | 8.3 |
| N₂ (+Ar) | 39.8 | 41.5 | 40.8 |
| CH₄ | 3.4 | 3.3 | 3.4 |
| C₂Hy | 1.5 | 1.3 | 1.4 |
| C₃-C₅Hy | 0.1 | <0.1 | <0.1 |
| H₂O | 22.5 | 20.2 | 21.5 |
| Tar + benzene in the gas. g/m³n | 17.3 | 14.0 | 15.2 |
| Carbon conversion. % by weight of carbon in fuel | 95.4 | 97.2 | 95.7 |
| Particle content of gas. g/m³n: | | | |
| after secondary | 11 | 31 | 10 |
| cyclone | <0.1 | <0.1 | <0.1 |
| after filter | | | |
| Balance of potassium removed. % of output: | | | |
| bottom ashes | 21 | 15 | 23 |
| secondary cyclone | 49 | - | 48 |
| filter | 30 | 85 | 29 |
| Correctness of material balances: | | | |
| carbon: in/out | 1.00 | 1.00 | 0.99 |
| ashes: in/out | 1.00 | 1.00 | 1.01 |

For the one skilled in the art it is obvious that the inventive applications are not limited to the examples described above, but may vary in the scope of the appended claims.

## Claims

1. A method for gasifying biofuel in a fluidized bed reactor, in which method fuel (15) and gasifying gas (18, 19) are fed to a flow that contains solid fluidized particles and is led through the reactor (1), **characterized in that** in the method a circulation (3, 4, 6) involving a part of the fluidized particles is maintained through the fluidized bed reactor (1) and a cyclone (5), that the gasifying is conducted at a temperature that is higher than the melting point temperature or sintering point temperature of the ashes produced from the fuel, that the particles contained in fluidized bed (3) are comprised of particles that are of a hard, essentially non-grindable material in admixture with particles that are of an easily grindable porous material, whereby said porous particles are pulverized in the fluidization while at the same time binding ash upon themselves, that porous particles (17) are added to the circulation (4) and that the product gas together with finely ground ash containing particles (9, 13) are separated from the circulation in the cyclone, while the circulating particles are returned from the cyclone back to the fluidized bed reactor.

2. A method according to claim 1, **characterized in that** the particles in the fluidized bed and in the circulation (3, 4, 6) comprise 70% - 90%, preferably about 80% by weight hard, non-grindable particles and 10% - 30%, preferably about 20% by weight grindable porous particles.

3. A method according to claim 1 or claim 2, **characterized in that** the hard, non-grindable particles in the fluidized bed (3) are of sand, the particle size of which is mainly about 0.1 - 0.6 mm.

4. A method according to claim 3, **characterized in that** sand (16) is added to the fluidized bed such that the amount of sand fed is about 1% - 3% by weight of the amount of fuel (15) fed.

5. A method according to any one of the preceding claims, **characterized in that** the fluidized porous particles in the circulation (3, 4, 6) are of a mineral material such as limestone or dolomite.

6. A method according to claim 5, **characterized in that** to the circulation are added limestone or dolomite particles (17), the particle size of which is mainly about 0.1 - 0.6 mm, such that the amount of particles fed is about 1% - 4% by weight of the amount of fuel (15) fed.

7. A method according to any one of the preceding claims, **characterized in that** from the circulation (4, 6) are removed particles (9, 13), the diameter of which is at the most about 20 µm and preferably in the range of 5 µm-20 µm.

8. A method according to any one of the preceding claims, **characterized in that** the finely ground ash containing particles (9, 13) are separated from the product gas by means of a cyclone (8) and/or by filtering (12).

9. A method according to any one of the preceding claims, **characterized in that** the gasifying gas is a mixture of air (18) and water vapour (19), where the percentage of water vapour is preferably about 10%- 30% by volume.

10. A method according to any one of the preceding claims, **characterized in that** the gasifying temperature is about 50 - 200 °C higher than the melting point temperature or the sintering point temperature of the fuel ashes and is preferebly at least 800 °C.

11. A method according to any one of the preceding claims, **characterized in that** the fuel (15) to be gasified contains alkaline matter.

12. A method according to any one of the preceding claims, **characterized in that** the fuel (15) to be gasified is agricultural waste such as straw.

13. A method according to any one of claims 1 - 11, **characterized in that** the fuel (15) to be gasified is a rapidly growing plant cultivated as an energy source such as willow.

## Patentansprüche

1. Verfahren zur Vergasung von Biokraftstoff in einem Wirbelbettreaktor, bei welchem Verfahren Kraftstoff (15) und Vergasungsgas (18, 19) einer Strömung zugeführt werden, die feste Wirbelbettpartikel enthält und durch den Reaktor (1 geleitet wird,
**dadurch gekennzeichnet, dass**
bei dem Verfahren eine Zirkulation (3, 4, 6) durch den Wirbelbettreaktor (1) und ein Zyklon (5) aufrecht erhalten wird, die einen Teil der Wirbelbettpartikel beinhaltet; dass
die Vergasung bei einer Temperatur erfolgt, die höher als die Schmelzpunkttemperatur oder die Sinterpunkttemperatur der aus dem Kraftstoff produzierten Aschen ist; dass
die in dem Wirbelbett (3) enthaltenen Partikel Partikel umfassen, die aus einem harten, im Wesentlichen nicht zermahlbaren Material bestehen, mit einer Zumischung von Partikeln, die aus einem leicht zermahlbaren, porösen Material bestehen, wodurch diese porösen Partikel in dem Wirbelbettprozess pulverisiert werden, während sie gleichzeitig Asche an sich binden; dass
poröse Partikel (17) der Zirkulation (4) zugesetzt werden; und dass
das Produktgas zusammen mit fein gemahlenen, Asche enthaltenden Partikeln (9, 13) in dem Zyklon von der Zirkulation abgesondert wird, während die zirkulierenden Partikel aus dem Zyklon zurück in den Wirbelbettreaktor geführt werden.

2. Verfahren nach Anspruch 1,
**dadurch gekennzeichnet, dass**
die Partikel in dem Wirbelbett und in der Zirkulation (3, 4, 6) 70 % - 90 %, vorzugsweise etwa 80 Gewichtsprozent, harte, nicht zermahlbare Partikel und 10 % - 30 %, vorzugsweise etwa 20 Gewichtsprozent, zermahlbare, poröse Partikel umfassen.

3. Verfahren nach Anspruch 1 oder Anspruch 2,
**dadurch gekennzeichnet, dass**
die harten, nicht zermahlbaren Partikel in dem Wirbelbett (3) aus Sand bestehen, dessen Partikelgröße hauptsächlich etwa 0,1 - 0,6 mm beträgt.

4. Verfahren nach Anspruch 3,
**dadurch gekennzeichnet, dass**
dem Wirbelbett Sand (16) in solcher Weise zugesetzt wird, dass die Menge an zugeführtem Sand etwa 1 - 3 Gewichtsprozent der Menge des zugeführten Kraftstoffs (15) beträgt.

5. Verfahren nach einem der vorhergehenden Ansprüche,
**dadurch gekennzeichnet, dass** die porösen Wirbelbettpartikel in der Zirkulation (3, 4, 6) aus einem mineralischen Material wie etwa Kalkstein oder Dolomit bestehen.

6. Verfahren nach Anspruch 5,
**dadurch gekennzeichnet, dass**
der Zirkulation Kalkstein- oder Dolomitpartikel (17) zugesetzt werden, deren Partikelgröße hauptsächlich etwa 0,1 - 0,6 mm beträgt, und zwar in solcher Weise, dass die Menge der zugeführten Partikel etwa 1 - 4 Gewichtsprozent der Menge des zugeführten Kraftstoffs (15) beträgt.

7. Verfahren nach einem der vorhergehenden Ansprüche,
**dadurch gekennzeichnet, dass**
aus der Zirkulation (4, 6) Partikel (9, 13) entfernt werden, deren Durchmesser höchstens etwa 20 um beträgt und bevorzugt im Bereich von 5 µm - 20 µm liegt.

8. Verfahren nach einem der vorhergehenden Ansprüche,
**dadurch gekennzeichnet, dass**
die fein gemahlenen, Asche enthaltenden Partikel (9, 13) mit Hilfe eines Zyklons (8) und/oder durch Filtern (12) von dem Produktgas abgesondert werden.

9. Verfahren nach einem der vorhergehenden Ansprüche,
**dadurch gekennzeichnet, dass**
das Vergasungsgas eine Mischung aus Luft (18) und Wasserdampf (19) ist, wobei der Prozentsatz an Wasserdampf vorzugsweise etwa 10 - 30 Volumenprozent beträgt.

10. Verfahren nach einem der vorhergehenden Ansprüche,
**dadurch gekennzeichnet, dass**
die Vergasungstemperatur etwa 50 - 200 °C höher als die Schmelzpunkttemperatur oder die Sinterpunkttemperatur der Kraftstoffaschen ist und bevorzugt mindestens 800 °C beträgt.

11. Verfahren nach einem der vorhergehenden Ansprüche,
**dadurch gekennzeichnet, dass**
der zu vergasende Kraftstoff (15) alkalisches Material enthält.

12. Verfahren nach einem der vorhergehenden Ansprüche,
**dadurch gekennzeichnet, dass**
der zu vergasende Kraftstoff (15) Abfall aus der Landwirtschaft, beispielsweise Stroh, ist.

13. Verfahren nach einem der Ansprüche 1 - 11,
**dadurch gekennzeichnet, dass**
der zu vergasende Kraftstoff (15) eine schnell wachsende Pflanze ist, die als Energiequelle angebaut wird, beispielsweise Weide.

## Revendications

1. Procédé pour gazéifier un biocombustible dans un réacteur à lit fluidisé, dans lequel le combustible (15) du procédé et le gaz de gazéification (18, 19) sont introduits dans un courant qui contient des particules fluidisées solides et est envoyé à travers le réacteur (1), **caractérisé en ce que**, dans le procédé, une circulation (3, 4, 6) impliquant une partie des particules fluidisées est maintenue à travers le réacteur à lit fluidisé (1) et un cyclone (5), **en ce que** la gazéification est mise en oeuvre à une température qui est supérieure à la température du point de fusion ou à la température du point de frittage des cendres produites à partir du combustible, **en ce que** les particules contenues dans le lit fluidisé (3) sont constituées de particules qui sont en un matériau dur, essentiellement non broyable, en mélange avec des particules qui sont en un matériau poreux facilement broyable, lesdites particules poreuses étant ainsi pulvérisées dans la fluidisation, tandis que les cendres se lient en même temps à leur surface, **en ce que** les particules poreuses (17) sont introduites dans la circulation (4), et **en ce que** le gaz produit, avec les particules (9, 13) contenant des cendres finement broyées, est séparé de la circulation dans le cyclone, les particules circulantes étant renvoyées du cyclone au réacteur à lit fluidisé.

2. Procédé selon la revendication 1, **caractérisé en ce que** les particules se trouvant dans le lit fluidisé et dans la circulation (3, 4, 6) comprennent de 70 à 90 %, de préférence environ 80 % en poids de particules dures non broyables, et de 10 à 30 %, de préférence environ 20 % en poids de particules poreuses broyables.

3. Procédé selon la revendication 1 ou 2, **caractérisé en ce que** les particules dures non broyables se trouvant dans le lit fluidisé sont constituées de sable, dont la granulométrie est essentiellement d'environ 0,1 à 0,6 mm.

4. Procédé selon la revendication 3, **caractérisé en ce que** le sable (16) est ajouté au lit fluidisé de façon que la quantité de sable introduite soit d'environ 1 à 3 % en poids de la quantité du combustible (15) introduit.

5. Procédé selon l'une quelconque des revendications précédentes, **caractérisé en ce que** les particules poreuses fluidisées se trouvant dans la circulation (3, 4, 6) sont constituées d'un matériau minéral tel que le calcaire ou la dolomite.

6. Procédé selon la revendication 5, **caractérisé en ce qu'**on ajoute à la circulation des particules de calcaire ou de dolomite (17), dont la granulométrie est essentiellement d'environ 0,1 à 0,6 mm, de façon que la quantité des particules introduites soit d'environ 1 à 4 % en poids de la quantité de combustible (15) introduit.

7. Procédé selon l'une quelconque des revendications précédentes, **caractérisé en ce qu'**on extrait de la circulation des particules (9, 13) dont le diamètre est d'au plus environ 20 µm et de préférence compris dans la plage de 5 à 20 µm.

8. Procédé selon l'une quelconque des revendications précédentes, **caractérisé en ce que** les particules (9, 13) contenant des cendres finement broyées sont séparées du gaz produit au moyen d'un cyclone (8) et/ou par filtration (12).

9. Procédé selon l'une quelconque des revendications précédentes, **caractérisé en ce que** le gaz de gazéification est un mélange d'air (18) et de vapeur d'eau (19), le pourcentage de vapeur d'eau étant de préférence d'environ 10 à 30 % en volume.

10. Procédé selon l'une quelconque des revendications précédentes, **caractérisé en ce que** la température de gazéification est d'environ 50 à 200°C plus élevée que la température du point de fusion ou la température du point de frittage des cendres combustibles, et est de préférence d'au moins 800°C.

11. Procédé selon l'une quelconque des revendications précédentes, **caractérisé en ce que** le combustible (15) devant être gazéifié contient une matière alcaline.

12. Procédé selon l'une quelconque des revendications précédentes, **caractérisé en ce que** le combustible devant être gazéifié est un déchet agricole, tel que la paille.

13. Procédé selon l'une quelconque des revendications 1 à 11, **caractérisé en ce que** le combustible (15) devant être gazéifié est une plante à croissance rapide cultivée en tant que source d'énergie, telle que le saule.
